# FASCICULE DE BREVET EUROPEEN

(11) **EP 1 004 343 B1**
(45) Date de publication et mention de la délivrance du brevet: **18.04.2007**
(21) Numéro de dépôt: 99402895.9
(22) Date de dépôt: 22.11.1999
(51) Int. Cl.: B01D 53/047

(54) **Procédé de séparation par absorption modulée en pression d'un mélange de gaz**
Verfahren für Druckwechseladsorption zur Trennung eines Gasgemisches
Pressure swing absorption process for separation of a gas mixture

(30) Priorité: 23.11.1998 FR 9814708
(43) Date de publication de la demande: 31.05.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Engler, Yves, 94300 Vincennes (FR); De Souza, Guillaume, 92130 Issy-les-Moulineaux (FR); Dolle, Pierre Olivier, 92300 Levallois-Perret (FR)
(74) Mandataire: Ducreux, Marie

(56) Documents cités:
- EP-A- 0 590 615
- US-A- 4 070 164
- US-A- 4 717 397
- US-A- 5 411 578

## Description

L'invention est relative à procédé de séparation par adsorption modulée en pression d'un mélange de gaz, dans lequel on met en oeuvre pour le ou chaque adsorbeur, un cycle de modulation de pression comprenant une succession d'étapes qui définissent des phases d'adsorption, de décompression / régénération et de remontée en pression.

Les pressions indiquées ci-après sont des pressions absolues.

L'invention peut être mise en oeuvre avec les cycles dits PSA (Pressure Swing Adsorption), dans lesquels l'adsorption s'effectue à une pression nettement supérieure à la pression atmosphérique, typiquement de l'ordre de 3 à 50 bars, tandis que la pression minimale du cycle est sensiblement égale soit à la pression atmosphérique, soit à une pression de quelques bars.

Par l'expression "adsorption modulée en pression", ou encore PSA (Pressure Swing Adsorption), on entend ici les différents cycles qui ont été proposés pour produire par exemple de l'hydrogène à partir d'un gaz de synthèse de reformage à la vapeur par adsorption sélective sensiblement isotherme, avec la pression de chaque adsorbeur variant entre une haute pression et une basse pression. Ces procédés comportent différentes combinaisons d'étapes d'adsorption, de décompression/régénération et de recompression des adsorbeurs.

De plus, dans ce qui suit, les termes "entrée" et "sortie" désignent les extrémités d'entrée et de sortie d'un adsorbeur en phase d'adsorption ; l'expression "co-courant" désigne le sens de circulation du gaz dans l'adsorbeur pendant cette phase d'adsorption, et l'expression "contre-courant" désigne le sens inverse de circulation.

Les installations dites PSA, c'est-à-dire les installations permettant de mettre en oeuvre les cycles PSA mentionnés ci-dessus, connaissent un succès croissant notamment dans le domaine du traitement des gaz de reformage à la vapeur ou catalytique d'une raffinerie.

En raffinerie de pétrole, les unités PSA sont très souvent utilisées pour traiter des gaz riches en hydrogène et en hydrocarbures tels que CH_{4,} C₂H₆, etc, pour la production d'hydrogène très pur de teneur supérieure à 99%.

Par exemple, les installations PSA permettent d'épurer efficacement les gaz de reformage contenant typiquement 85% H₂, 10% CH₄ et 5% d'hydrocarbures ayant un nombre d'atomes de carbone égal ou supérieur à deux tels que par exemple C₂H₆, ...etc.

Cet hydrogène pur est utilisé dans d'autres procédés de la raffinerie pour améliorer la qualité des produits : désulfurisation des coupes diesels, hydrogénation des essences, hydrotraitement de produits lourds, etc.

Le gaz résiduaire issu de l'unité PSA possède encore un pouvoir énergétique élevé et est généralement envoyé dans le réseau de distribution de gaz combustible de la raffinerie pétrolière, la pression d'un tel réseau étant typiquement aux alentours de 6 bars.

Pour pouvoir envoyer le gaz résiduaire dans ce réseau de distribution de gaz de la raffinerie, on est contraint de faire fonctionner l'unité PSA selon un cycle dont la pression basse de la phase de décompression / régénération est voisine de la pression du réseau de distribution de gaz combustible de la raffinerie, c'est-à-dire égale à environ 6 bars.

Or, la régénération à une pression basse de 6 bars est pénalisante quant au rendement d'une unité PSA, la perte de rendement étant de 15 à 20 points comparativement à une unité dont la pression de régénération serait de 1,5 bar.

Pour pallier cet inconvénient, la pression basse (dite de régénération) de l'unité PSA est généralement de 1,5 bar, et le gaz résiduaire est comprimé de cette pression à la pression du réseau de gaz combustible L'inconvénient de cette solution réside dans l'investissement et les coûts opératoires supplémentaires qu'entraîne l'installation de ce compresseur.

L'invention vise à pallier ces divers inconvénients en proposant un procédé permettant d'utiliser le gaz résiduaire en sortie de l'unité PSA de façon optimale sans qu'un recours à un compresseur supplémentaire soit nécessaire.

A cet effet, l'invention a pour objet un procédé de séparation d'un mélange de gaz, notamment de production d'hydrogène, par adsorption modulée en pression, dans lequel on met en oeuvre, pour le ou chaque adsorbeur, un cycle de modulation de pression comprenant une succession d'étapes qui définissent des phases d'adsorption, de décompression/ régénération et de remontée en pression, caractérisé en ce que lors d'une première étape de la phase de décompression / régénération pendant laquelle la pression dudit adsorbeur est comprise dans une première plage de pressions intermédiaires comprises entre la pression haute et la pression basse du cycle, on évacue le gaz résiduaire en sortie de l'adsorbeur vers une première conduite de distribution du gaz résiduaire sous une première pression de distribution, et en ce que lors d'une seconde étape de la phase de décompression / régénération pendant laquelle la pression dudit adsorbeur est comprise dans une seconde plage de pressions comprises entre la pression basse de ladite première plage de pressions et la pression basse du cycle, on évacue le gaz résiduaire en sortie de l'adsorbeur vers une seconde conduite de distribution du gaz résiduaire sous une seconde pression de distribution inférieure à la première pression de distribution.

Le procédé selon l'invention peut de plus comporter une ou plusieurs des caractéristiques suivantes :
- ladite première conduite de distribution du gaz résiduaire est raccordée à un premier réseau de distribution de gaz à une pression comprise entre 2 et 9 bars environ, typiquement un réseau de distribution de gaz combustible, notamment d'une installation pétrochimique, dans le cas où le gaz résiduaire est un gaz combustible.
- ladite seconde conduite de distribution de gaz résiduaire est raccordée à un second réseau de distribution de gaz à une pression sensiblement égale à la pression basse du cycle, typiquement comprise entre 1 et 3 bars environ, ladite seconde conduite de distribution de gaz résiduaire étant par exemple raccordée à un module de brûleurs fonctionnant à une pression comprise entre 1 et 2 bars pour alimenter ceux-ci en combustible, dans le cas où le gaz résiduaire est un gaz combustible.

L'invention a en outre pour objet une unité de séparation d'un mélange de gaz, notamment de production d'hydrogène, par adsorption modulée en pression comprenant au moins un adsorbeur et des moyens pour mettre en oeuvre dans celui-ci un cycle de modulation de pression, comprenant une succession d'étapes qui définissent des phases de d'adsorption, de décompression/ régénération et de remontée en pression, dans laquelle l'entrée de chaque adsorbeur est reliée par l'intermédiaire d'une vanne respective d'une part à une première conduite d'évacuation de gaz résiduaire pour évacuer ledit gaz résiduaire lors d'une première étape de la phase de décompression / régénération vers une première conduite de distribution du gaz résiduaire, et d'autre part à une première pression à une seconde conduite d'évacuation de gaz résiduaire pour évacuer ledit gaz résiduaire lors d'une seconde étape de la phase de décompression / régénération vers une seconde conduite de distribution du gaz résiduaire, une deuxième pression, typiquement inférieure à la première pression.

L'invention a en outre pour objet une installation pétrochimique, notamment de raffinage, caractérisée en ce qu'elle comprend une unité de séparation d'un mélange de gaz, notamment de production d'hydrogène, par adsorption modulée en pression telle que définie ci-dessus, et une unité de production du mélange de gaz devant être traité par ladite unité de séparation, équipée d'un module à brûleurs relié à ladite seconde conduite d'évacuation de gaz résiduaire.

L'unité de production du mélange de gaz à traiter est par exemple une unité de reformage à la vapeur, une unité de reformage catalytique ou une unité d'oxydation partielle.

D'autres caractéristiques et avantages de l'invention ressortiront de la description suivante, donnée à titre d'exemple, sans caractère limitatif, en regard des dessins annexés sur lesquels :

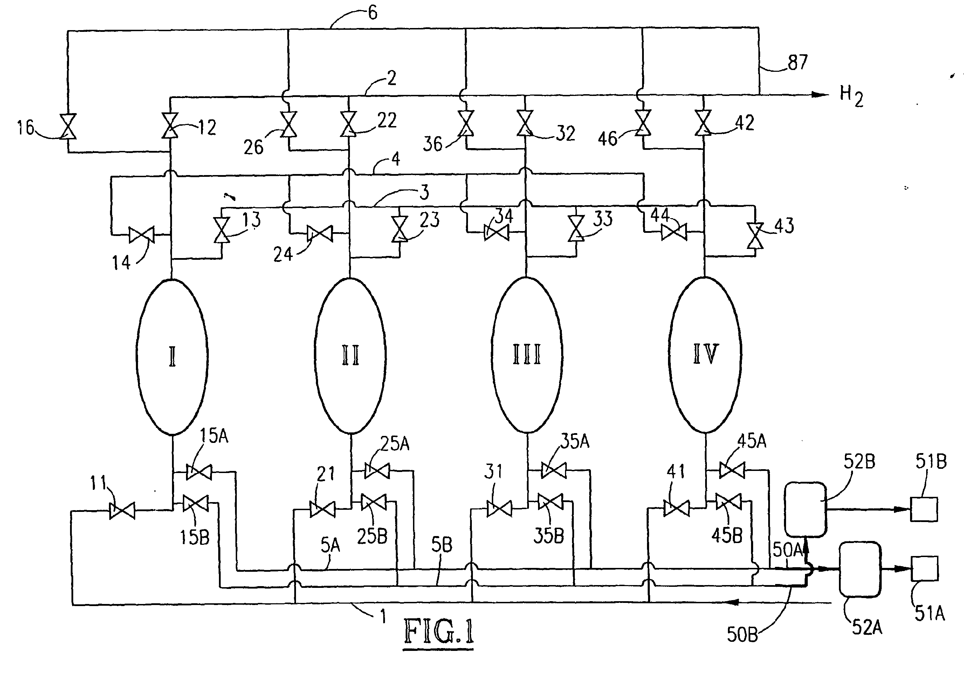

- la Figure 1 représente schématiquement une unité PSA conforme à l'invention ;
- la Figure 1 bis est un schéma partiel d'une variante;
- la Figure 2 est un diagramme illustrant le procédé de l'invention mis en oeuvre à l'aide de l'unité de la figure 1,
- la Figure 3 représente schématiquement une variante du procédé illustré sur la figure 2;
- la Figure 4 est un schéma d'une partie d'une installation de raffinage pétrolier suivant l'invention; et
- la Figure 5 est un diagramme illustrant une variante du procédé suivant l'invention.

L'installation représentée à titre d'exemple sur la figure 1 est une unité destinée à produire de l'hydrogène typiquement sous une pression relativement élevée, typiquement de l'ordre de 15 à 30 bars. Cette production s'effectue par adsorption sélective à partir d'un mélange gazeux d'alimentation, au moyen de quatre adsorbeurs portant respectivement les références I, II, III et IV. Le gaz d'alimentation est par exemple un gaz de synthèse de reformage à la vapeur issu d'une unité de reformage à la vapeur et est acheminé à débit constant par une conduite d'alimentation 1 auquel l'entrée de chaque adsorbeur I à IV est reliée par l'intermédiaire d'une vanne respective de réglage 11, 21, 31, 41.

La sortie de chaque adsorbeur I à IV est reliée par l'intermédiaire d'une vanne respective de réglage 12, 22, 32 et 42 à une conduite de production 2 de l'hydrogène.

De plus, la sortie de chaque adsorbeur I à IV est reliée d'une part par l'intermédiaire d'une vanne respective de réglage 13, 23, 33 et 43 à une conduite 3 d'équilibrage de pressions entre adsorbeurs, et d'autre part par l'intermédiaire d'une vanne respective de réglage 14, 24, 34 et 44 à une conduite 4 d'élution.

Par «équilibrage de pressions entre adsorbeurs », on entend un transfert de gaz entre adsorbeurs pour équilibrer les pressions régnant dans ces adsorbeurs. Cet équilibrage peut être soit total de sorte qu'à la fin de l'équilibrage, la pression dans les deux adsorbeurs mis en communication est égale, soit partiel de sorte qu'à la fin de l'équilibrage, la pression dans les deux adsorbeurs mis en communication est différente.

L'installation comporte en outre une première 5A et une seconde 5B conduites d'évacuation de gaz résiduaire auxquelles l'entrée de chaque adsorbeur I à IV est reliée par une vanne respective de réglage 15A, 25A, 35A et 45A en ce qui concerne la première conduite d'évacuation 5A, et 15B, 25B, 35B et 45B en ce qui concerne la seconde conduite d'évacuation 5B.

La première conduite d'évacuation 5A est raccordée à une première conduite 50 A de distribution du gaz résiduaire en sortie des adsorbeurs I à IV pour alimenter par exemple un réseau 51A de gaz combustible à environ 6 bars d'une installation de raffinage. La seconde conduite d'évacuation 5B est raccordée à une seconde conduite 50B de distribution du gaz résiduaire à la basse pression du cycle, pour alimenter par exemple un réseau 51B de gaz combustible à la pression basse Pm du cycle PSA.

Afin de pouvoir stabiliser le débit du gaz résiduaire à la pression basse Pm du cycle et pour des raisons d'homogénéisation de ce gaz, des réservoirs-tampons 52A et 52B sont disposés dans les conduites de distribution 50A et 50B respectivement.

En variante (Figure 1 bis), chaque adsorbeur est relié, via une vanne 15 à 45, à une unique conduite 50 de gaz résiduaire. Celle-ci se divise en deux branches 50A, 50B équipées des réservoirs-tampons 52A et 52B et conduisant respectivement aux réseaux 51A, 51B, via des vannes d'arrêt et/ou de contrôle respectives 53A, 53B.

Enfin, l'unité comprend une seconde conduite 6 d'équilibrage de pressions entre adsorbeurs à laquelle la sortie de chaque adsorbeur I à IV est reliée par une vanne respective de réglage 16, 26, 36 et 46. Cette troisième conduite 6 est une conduite de recompression finale. A cet effet, elle est reliée par un embranchement 87 à la conduite de production 2.

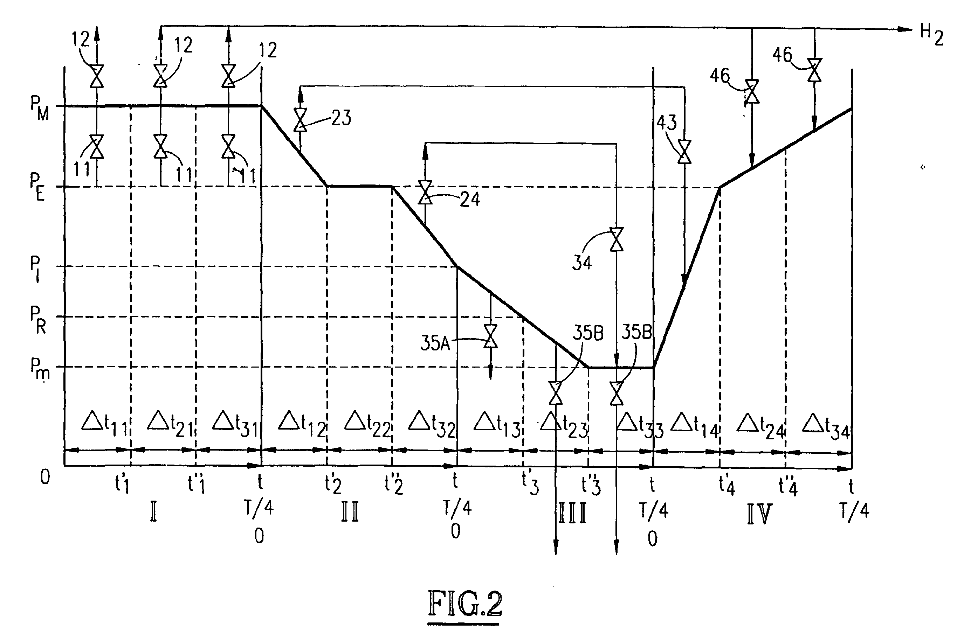

L'installation comporte en outre divers moyens non représentés de commande et de contrôle, bien connus dans la technique, adaptés pour mettre en oeuvre le cycle d'adsorption modulée en pression (Pressure Swing Adsorption ou PSA) illustré sur la Figure 2.

Sur cette Figure 2, où les temps t sont portés en abscisses et les pressions absolues P en ordonnées, les traits orientés par des flèches indiquent les mouvements et destinations des courants gazeux.

Pour chaque adsorbeur I à IV, on a représenté un quart d'un cycle complet, c'est à dire entre t=0 et t = T/4, et les diagrammes pour les adsorbeurs I à IV sont représentés les uns à côté des autres.

Dans cette figure, lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le sens du courant dans l'adsorbeur est à co-courant. Lorsqu'une flèche est dans le sens des ordonnées décroissantes (vers le bas du diagramme), le sens du courant dans l'adsorbeur est à contre-courant.

En outre, on a représenté sur les flèches des symboles de vannes avec leurs numéros de référence. Ces vannes correspondent aux vannes de l'installation de la figure 1. Quand un tel symbole est dessiné sur une flèche, cela signifie que la vanne indiquée est à l'état passant et le gaz s'écoule à travers elle.

Dans l'exemple considéré, la pression haute PM du cycle est de l'ordre de 27 bars, et la pression basse Pm du cycle est voisine de 1,7 bar

Le temps de phase T/4 est par exemple de 180 s.

Il est à noter que, pour la clarté du dessin, les proportions des pressions n'ont pas été respectées sur la Figure 2.

Pour expliquer les écoulements de gaz dans l'installation ayant lieu en même temps, on décrira le premier quart du cycle complet en référence à l'adsorbeur I, c'est-à-dire entre un instant t= 0 et un instant t = T/4 ou T est la durée d'un cycle complet, le second quart de cycle en référence à l'adsorbeur Il, le troisième quart en référence à l'adsorbeur III et le dernier quart de cycle en référence à l'adsorbeur IV. Pour obtenir un cycle complet pour un seul adsorbeur, il faut seulement enchaîner les quarts de cycle des autres adsorbeurs. Par exemple, pour obtenir le cycle complet de l'adsorbeur I, on enchaîne aux étapes du cycle entre 0 et T/4, les étapes de cycle de l'adsorbeur Il entre T/4 et T/2, celles de l'adsorbeur III entre T/2 et 3T/4. et celles de l'adsorbeur IV entre 3T/4 et T. Ainsi, on obtient un cycle identique pour tous les adsorbeurs, mais décalé dans le temps de T/4, T/2 et 3T/4 respectivement.

Par ailleurs, chaque quart de cycle relatif à l'adsorbeur i (i = 1 à 4) est subdivisé en trois périodes d'une durée de respectivement Δt₁ᵢ (entre t=0 et t = tᵢ'), Δt₂ᵢ (entre t=tᵢ' et t=tᵢ"), et Δt₃; (entre t=tᵢ" et T/4), la somme des trois périodes étant égale à T/4.

### Etapes de cycle pendant Δt₁ᵢ :

### Adsorbeur I :

Lors de la période Δt₁ᵢ, la vanne 11 se trouve à l'état passant et l'adsorbeur I est dans une première étape d'adsorption à co-courant, dans laquelle le mélange gazeux à traiter est introduit via la conduite 1 et à l'entrée de adsorbeur I au voisinage de la pression PM et circule à co-courant à travers celui-ci. De plus, la vanne 12 est à l'état passant afin que l'hydrogène de production soit soutiré à la sortie de l'adsorbeur I et envoyé dans la conduite de production 2.

### Adsorbeurs II et IV :

Pendant Δt₁₂ et Δt₁₄, de même durée, l'adsorbeur II subit une étape de première décompression à co-courant par équilibrage de pressions avec l'adsorbeur IV en phase de première recompression à contre-courant. A cet effet, la vanne 23 est à l'état passant, de sorte que de l'hydrogène soutiré de l'adsorbeur II s'écoule dans la conduite 3, et par l'intermédiaire de la vanne 43, dans l'adsorbeur IV.

Au cours de cette étape, la pression de l'adsorbeur II tombe de PM à une valeur intermédiaire PE, dite pression d'équilibrage. De même, la pression de l'adsorbeur IV remonte de Pm à la valeur intermédiaire PE.

### Adsorbeur III :

Pendant Δt₁₃, l'adsorbeur III est dans la phase de décompression /régénération et subit une première étape de décompression à contre-courant depuis une pression P_{I} jusqu'à une pression intermédiaire P_{R}. Cette pression P_{R} correspond par exemple à la pression régnant dans un réseau de gaz combustible d'une installation de raffinerie, alimenté avec le gaz résiduaire.

Lors de cette étape, pendant laquelle la pression de l'adsorbeur III est comprise dans une première plage de pressions intermédiaires comprises entre les pressions P_{I} et P_{R}, la vanne 35A est à l'état passant, la vanne 35B est fermée, et le gaz soutiré de l'entrée de l'adsorbeur III est évacué, via la conduite 5A, vers la première conduite de distribution 50A du gaz résiduaire, équipée du réservoir-tampon 52A.

Le réservoir-tampon 52A assure une meilleure homogénéisation du gaz résiduaire et permet de maintenir un débit de sortie du gaz résiduaire sensiblement constant.

Il est à noter que les durées Δt₁₂ et Δt₁₄ des étapes d'équilibrage (adsorbeurs II et IV) doivent être égales, mais que les durées Δt₁₁ de production et Δt₁₃ de l'étape de décompression subie par l'adsorbeur III peuvent, en variante, avoir des durées différentes.

### Etapes de cycle pendant Δt₂ᵢ:

### Adsorbeurs I et IV :

Lors de la période Δt₂₁ = Δt₂₄, l'adsorbeur I se trouve dans une seconde étape d'adsorption à co-courant, qui ne diffère de la précédente lors de Δt₁₁ que par le fait qu'un débit d'hydrogène prélevé de la conduite de production 2 est envoyé, via la vanne 46 à l'état passant, à contre-courant dans l'adsorbeur IV en étape intermédiaire de recompression à contre-courant.

### Adsorbeur II:

Après la première étape de décompression Δt₁₂, l'adsorbeur Il est isolé pendant le temps Δt₂₂.

### Adsorbeur III :

Pendant Δt₂₃, l'adsorbeur III subit une décompression finale à contre-courant de la pression P_{R} à la pression basse du cycle Pm. La vanne 35B est à l'état passant et le gaz soutiré de l'entrée de l'adsorbeur III est évacué via la conduite 5B vers la conduite de distribution 50B. Le réservoir-tampon 52B assure l'homogénéisation du gaz résiduaire en débit et en composition.

Lors de cette étape, pendant laquelle la pression de l'adsorbeur III se trouve dans une seconde plage de pressions comprises entre la pression basse de ladite première plage, c'est-à-dire la pression P_{R}, et la pression basse Pm du cycle, la vanne 35B est à l'état passant, la vanne 35A est fermée, et le gaz soutiré de l'entrée de l'adsorbeur III est évacué via la conduite 5B vers la seconde conduite de distribution 50B dans laquelle est disposé le réservoir-tampon 52B. Ce gaz résiduaire, dont la pression est comprise dans ladite seconde plage de pression, peut être utilisé pour alimenter un réseau de gaz combustible ayant une pression sensiblement égale à la pression basse Pm du cycle ou pour alimenter directement des brûleurs fonctionnant à des pressions comprises entre 1 et 2 bars et équipant une unité de reformage à la vapeur (connu également sous l'abréviation SMR), de reformage catalytique ou d'oxydation partielle (connu également sous l'abréviation POX).

### Etapes de cycle pendant Δt₃ᵢ:

### Adsorbeurs I et IV :

Lors de la période Δt₃₁ = Δt₃₄, l'adsorbeur 1 se trouve dans une troisième étape d'adsorption identique à la précédente lors de Δt₂₁, c'est-à-dire un débit d'hydrogène prélevé de la conduite de production 2 est envoyé, via la vanne 46 à l'état passant, à contre-courant dans l'adsorbeur IV en étape de recompression finale jusqu'au voisinage de la pression PM.

### Adsorbeurs II et III :

Pendant Δt₃₂ = Δt₃₃, l'adsorbeur II subit une étape de deuxième décompression à co-courant de la pression P_{E} à la pression P_{I}, dans laquelle le gaz soutiré de sa sortie est envoyé à contre-courant dans l'adsorbeur III en phase d'élution.

A cet effet, les vannes 24 et 34 sont à l'état passant, de sorte que de l'hydrogène soutiré de l'adsorbeur II s'écoule par l'intermédiaire de la conduite 4 dans l'adsorbeur III, en phase d'élution.

La vanne 35B reste à l'état passant et le gaz soutiré de l'entrée de l'adsorbeur III est évacué à pression sensiblement constante, via la conduite 5B, vers la conduite de distribution 50B et le réservoir-tampon 52B.

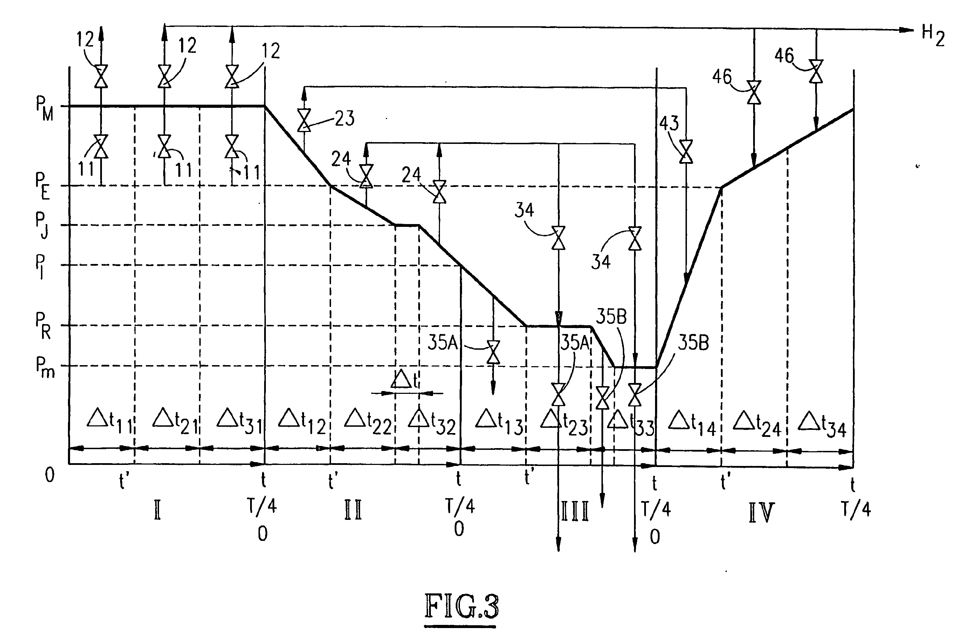

La figure 3 montre une variante du procédé représenté à la figure 2. Cette variante, qui comporte deux étapes d'élution, une à la pression P_{R} et l'autre à la pression Pm, permet de répartir les quantités de gaz résiduaire alimentant les réseaux haute et basse pression tout en régénérant correctement les adsorbants.

Cette variante se différencie du cycle de la Figure 2 par les étapes que subissent les adsorbeurs Il et III.

En effet, pendant Δt₂₂, l'adsorbeur II subit une seconde décompression à co-courant de la pression P_{E} à une pression P_{J} > P_{I}.

Le gaz soutiré de la sortie de cet adsorbeur assure une première élution de l'adsorbeur III à la pression P_{R} définie plus haut.

Puis, pendant une fraction initiale Δt de Δt₃₂, l'adsorbeur Il est isolé et, pendant le reste de Δt₃₂, il subit une troisième décompression à co-courant de P_{J} à P_{I} en assurant une deuxième élution de l'adsorbeur III à la pression Pm.

De façon correspondante, pendant Δt₁₃, l'adsorbeur III subit une étape de décompression à contre-courant depuis la pression P_{I} jusqu'à la pression P_{R}. Lors de cette étape de décompression, la vanne 35A est à l'état passant et le gaz soutiré de l'entrée de l'adsorbeur III est évacué via la conduite 5A vers la conduite 50A de distribution du gaz résiduaire.

Pendant Δt₂₃, l'adsorbeur III subit une première étape d'élution à la pression P_{R} du réseau fuel par du gaz issu de la sortie de l'adsorbeur II. La vanne 35A reste à l'état passant, les vannes 24 et 34 sont également à l'état passant et le gaz soutiré de l'entrée de l'adsorbeur III est évacué à pression constante via la conduite 5A vers la conduite 50A de distribution.

Ensuite, pendant Δt₃₃, l'adsorbeur III subit une décompression finale à contre-courant depuis la pression P_{R} jusqu'à la pression basse Pm du cycle, puis une seconde étape d'élution à la pression basse Pm du cycle par du gaz issu à co-courant de l'adsorbeur II. La vanne 35B est à l'état passant et le gaz soutiré de l'entrée de l'adsorbeur III est évacué à pression constante via la conduite 5B vers la conduite 50B de distribution et le réservoir-tampon 52.

Le cycle illustré sur la figure 3 présente l'avantage que pendant les étapes d'élution à des pressions P_{R} et Pm respectives, le gaz résiduaire est soutiré à pression constante vers les conduites respectives de distribution 50A et 50B du gaz résiduaire, qui peuvent donc servir de source pour alimenter à une pression constante prédéfinie un réseau de gaz ou un module consommateur du gaz résiduaire.

On comprend donc que grâce à l'agencement de l'unité d'adsorption, en particulier grâce aux deux conduites 5A et 5B d'évacuation du gaz résiduaire dans des plages de pression prédéfinies, et grâce aux cycles proposés, on peut utiliser le gaz résiduaire de manière optimale tout en assurant un rendement élevé de l'unité d'adsorption et sans recours à un compresseur supplémentaire.

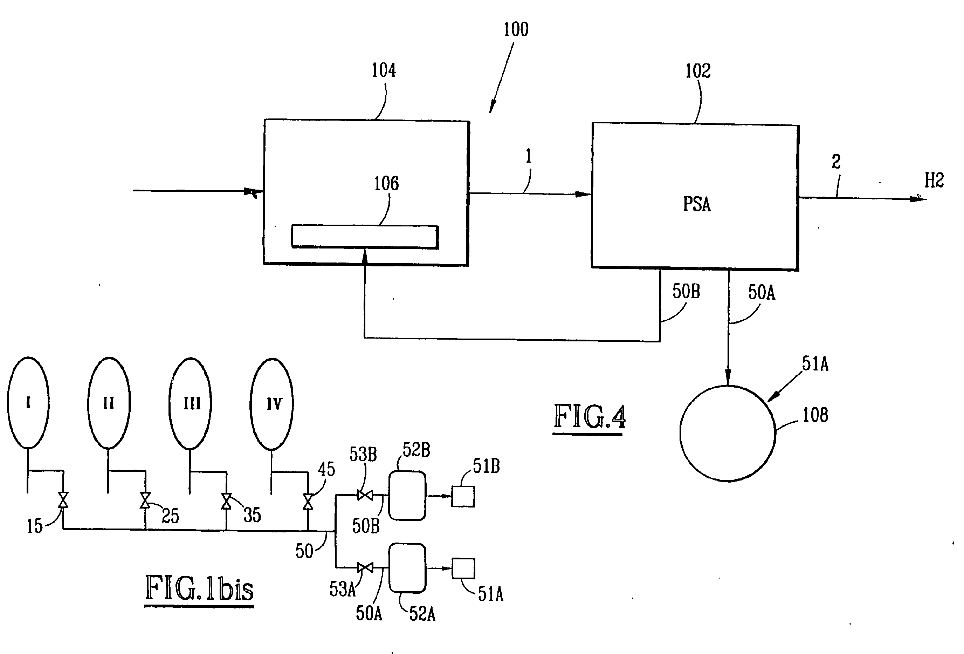

La Figure 4 présente un schéma simplifié d'une installation 100 pétrochimique, notamment de raffinage.

Cette installation 100 comprend une unité PSA 102 fonctionnant par exemple selon un des cycles décrits en référence aux figures 2 et 3. L'entrée de cette unité PSA 102 est raccordée à une sortie d'une unité 104 de production d'un mélange de gaz devant être traité par cette unité PSA 102. Cette unité 104 est par exemple unité de reformage à la vapeur ("steam reformer" ou SMR en anglais). L'unité 104 est généralement équipée d'un module de brûleurs 106, les brûleurs fonctionnant dans la seconde plage de pressions auxquelles le gaz résiduaire est soutiré. La conduite 50B de distribution est reliée au module de brûleurs 106 pour l'alimentation de ceux-ci. La quantité de gaz résiduaire soutiré de l'unité PSA est généralement suffisante pour subvenir aux besoins énergétiques d'un tel module de brûleurs 106.

En variante, le gaz résiduaire peut également être utilisé pour satisfaire les besoins énergétiques d'une unité d'oxydation partielle, également connu sous le nom POX, ou d'une unité de reformage catalytique.

La conduite 50A fournissant le gaz résiduaire à des pressions plus élevées que la conduite 50B est par exemple reliée au réseau de gaz combustible 108 de l'installation de raffinage.

Etant donné que l'unité PSA 102 fournit le gaz résiduaire à des pressions souhaitées sans compresseur intercalé, la fiabilité de l'installation est augmentée et les coûts liés à un tel compresseur sont supprimés.

Bien entendu, l'invention s'applique également à des unités PSA comportant un nombre d'adsorbeurs différent de quatre et/ou comportant plus d'une opération d'équilibrage de pressions entre adsorbeurs au cours de la décompression. Elle s'applique également à des unités PSA utilisant par exemple des réservoirs-tampons, par exemple pour l'équilibrage de pressions entre deux adsorbeurs.

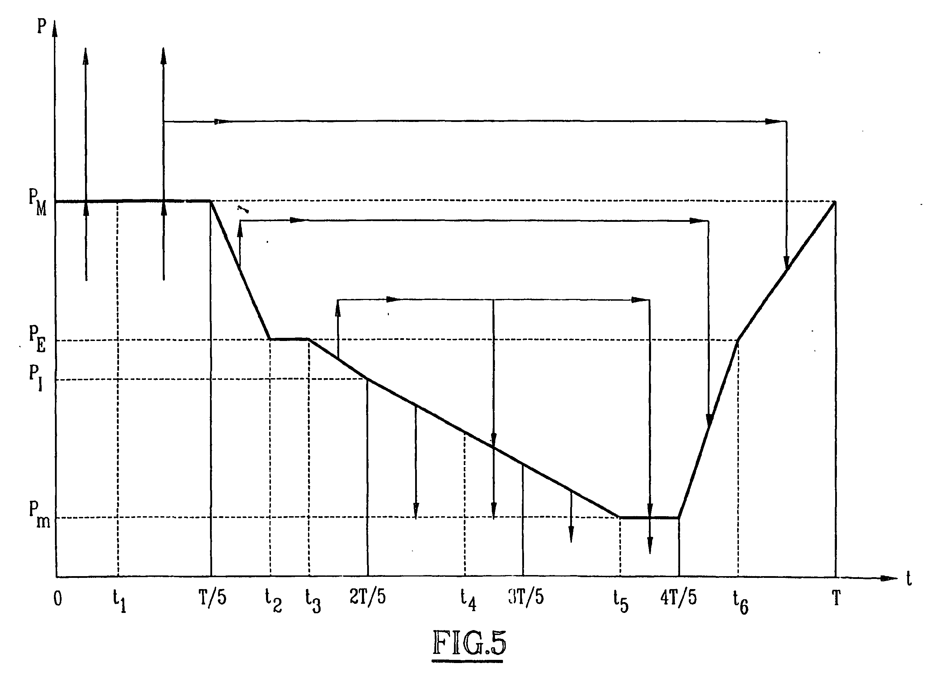

Ainsi, la Figure 5 illustre un cycle à cinq adsorbeurs suivant l'invention qui présente l'avantage d'un envoi en continu de gaz résiduaire vers chacun des réseaux 51A et 51B. Le diagramme est ici simplifié car ne représentant pas les vannes, et on le décrira en relation avec un seul et même adsorbeur. Les cycles des autres adsorbeurs sont identiques mais décalés de T/5, 2T/5, 3T/5 et 4T/5, respectivement.

Le cycle se compose des phases/étapes suivantes :

### - Phase d'adsorption :

- de t = 0 à t1 : étape de production.
- de t1 à T/5 : étape de production au cours de laquelle une partie du gaz issu de l'adsorbeur est envoyé à contre-courant dans un autre adsorbeur en étape de recompression finale à contre-courant.

### - Phase de régénération :

- de T/5 à t2 : première décompression à co-courant par équilibrage de pressions, jusqu'à la pression P_{E}, avec un autre adsorbeur en étape de première recompression à contre-courant.
- de t2 à t3 : temps mort au cours duquel l'adsorbeur est isolé.
- de t3 à 2T/5 : étape de seconde décompression à co-courant, au cours de laquelle le gaz issu de l'adsorbeur est envoyé d'une part à un autre adsorbeur en cours de seconde étape de décompression à contre-courant, et d'autre part, à un autre adsorbeur en cours d'étape de purge/élution. A l'issue de cette étape, la pression est P_{I}.
- de 2T/5 à t4 : étape de première décompression à contre-courant.
- de t4 à 3T/5 : étape de seconde décompression à contre-courant au cours de laquelle l'adsorbeur reçoit simultanément à contre-courant du gaz issu d'un autre adsorbeur en cours de seconde décompression à co-courant.
- de 3T/5 à t5 : étape de décompression finale à contre-courant. A l'issue de cette étape, la pression basse Pₘ du cycle est atteinte.
- de t5 à 4T/5 : étape de purge/élution à la basse pression Pₘ, au moyen de gaz issu d'un autre adsorbeur en cours de seconde décompression à co-courant.

### - Phase de recompression :

- de 4T/5 à t6 : étape de première recompression à contre-courant par équilibrage de pressions avec un autre adsorbeur en cours de première décompression à co-courant.
- de t6 à T : étape de recompression finale à contre-courant au moyen de gaz de production.

Il apparaît ainsi que l'adjonction d'un cinquième adsorbeur permet d'envoyer du gaz résiduaire au réseau 51A pendant la totalité d'un temps de phase (de 2T/5 à 3T/5), et de même d'envoyer du gaz résiduaire au réseau basse pression 51 B pendant la totalité d'un temps de phase (de 3T/5 à 4T/5). Ces deux réseaux 51 A et51B sont donc alimentés en permanence.

Bien entendu, dans ce cycle comme dans les cycles décrits précédemment, les étapes concomitantes, au cours desquelles deux adsorbeurs sont mis en communication l'un avec l'autre, ont des durées égales.

De plus, l'envoi de gaz à contre-courant dans l'adsorbeur de t4 à 3T/5 permet de mieux contrôler le débit de gaz résiduaire dans le réseau 51A comme dans le réseau 51B.

## Revendications

1. Procédé de production d'hydrogène, par adsorption modulée en pression entre une pression basse et une pression haute de cycle dans au moins un adsorbeur, dans lequel on met en oeuvre, pour le ou chaque adsorbeur (I, II, III, IV), un cycle de modulation de pression comprenant une succession d'étapes qui définissent des phases d'adsorption, avec production d'hydrogène sensiblement à la pression haute (PM) du cycle, de décompression/régénération jusqu'à la pression basse (Pm) du cycle avec évacuation de gaz résiduaire de l'adsorbeur, et de remontée en pression, **caractérisé en ce que** lors d'une première étape de la phase de décompression / régénération, pendant laquelle la pression dudit adsorbeur (I, II, III, IV) est comprise dans une première plage de pressions intermédiaires comprises entre la pression haute (PM) et la pression basse (Pm) du cycle, on évacue dudit adsorbeur par une étape de décompression à contre-courant le gaz résiduaire vers une première conduite (50A) de distribution du gaz résiduaire sous une première pression de distribution, et **en ce que** lors d'une seconde étape de la phase de décompression/régénération, pendant laquelle la pression dudit adsorbeur (I, II, III, IV) est comprise dans une seconde plage de pressions comprises entre la pression basse (P_{R}) de ladite première plage de pressions et la pression basse (Pm) du cycle, on évacue dudit adsorbeur par une étape de décompression à contre-courant le gaz résiduaire vers une seconde conduite (50B) de distribution du gaz résiduaire sous une seconde pression de distribution inférieure à la première pression de distribution.

2. Procédé selon la revendication 1, **caractérisé en ce que** ladite première conduite (50A) de distribution du gaz résiduaire est raccordée à un premier réseau (108) de distribution de gaz à une pression comprise entre 2 et 9 bars environ.

3. Procédé selon la revendication 2, dans lequel le gaz résiduaire est un gaz combustible, **caractérisé en ce que** ledit premier réseau de gaz est un réseau de distribution de gaz combustible (108), notamment d'une installation pétrochimique (100).

4. Procédé selon l'une quelconque des revendications précédentes, **caractérisé en ce que** ladite première étape de la phase de décompression/régénération comprend une étape d'élution effectuée à une pression sensiblement égale à ladite première pression (P_{R}) de distribution.

5. Procédé selon l'une quelconque des revendications précédentes, **caractérisé en ce que** ladite seconde conduite (50B) de distribution de gaz résiduaire est raccordée à un second réseau de distribution de gaz à une pression sensiblement égale à la pression basse du cycle, comprise entre 1 et 3 bars environ.

6. Procédé selon l'une quelconque des revendications précédentes dans lequel le gaz résiduaire est un gaz combustible, **caractérisé en ce que** ladite seconde conduite (50B) de distribution de gaz résiduaire est raccordée à un module de brûleurs (106) fonctionnant à une pression comprise entre 1 et 2 bars pour alimenter ceux-ci en combustible.

7. Procédé selon l'une quelconque des revendications précédentes, **caractérisé en ce que** ladite seconde étape comprend une étape d'élution, effectuée à la pression basse (Pm) du cycle, laquelle est sensiblement égale à ladite seconde pression de distribution.

8. Procédé selon l'une quelconque des revendications précédentes, **caractérisé en ce que**, pendant une fraction au moins de l'une au moins desdites première et deuxième étapes, l'adsorbeur est alimenté par un débit contrôlé de gaz provenant d'un autre adsorbeur.

9. Procédé selon l'une quelconque des revendications précédentes, **caractérisé en ce que** l'une au moins desdites première et deuxième étapes a une durée égale au temps de phase T/n, où T désigne la durée du cycle et n le nombre d'adsorbeurs.

## Claims

1. Process for producing hydrogen by pressure swing adsorption between a low cycle pressure and a high cycle pressure in at least one adsorber, in which a pressure swing cycle is carried out for the or each adsorber (I, II, III, IV), said cycle comprising a succession of steps which define an adsorption phase, with hydrogen production substantially at the high pressure (P_{M}) of the cycle, a decompression/regeneration phase down to the low pressure (Pₘ) of the cycle with discharge of the offgas from the adsorber, and a pressurerise phase, **characterized in that**, in a first step of the decompression/regeneration phase, during which the pressure of said adsorber (I, II, III, IV) lies within a first range of intermediate pressures between the high pressure (P_{M}) and the low pressure (Pₘ) of the cycle, the offgas is discharged from said adsorber, by a countercurrent decompression step, into a first line (50A) for delivering the offgas at a first delivery pressure and **in that**, in a second step of the decompression/regeneration phase, during which the pressure of said adsorber (I, II, III, IV) lies within a second range of pressures between the low pressure (P_{R}) of said first pressure range and the low pressure (Pₘ) of the cycle, the offgas is discharged from said adsorber, by a countercurrent decompression step, into a second line (50B) for delivering the offgas at a second delivery pressure below the first delivery pressure.

2. Process according to Claim 1, **characterized in that** said first offgas delivery line (50A) is connected to a first network (108) for delivering gas at a pressure of between about 2 and 9 bar.

3. Process according to Claim 2, in which the offgas is a combustible gas, **characterized in that** said first gas network is a combustible gas delivery network (108), in particular of a petrochemical plant (100).

4. Process according to any one of the preceding claims, **characterized in that** said first step of the decompression/regeneration phase includes an elution step carried out at a pressure substantially equal to said first delivery pressure (P_{R}).

5. Process according to any one of the preceding claims, **characterized in that** said second offgas delivery line (50B) is connected to a second gas delivery network at a pressure substantially equal to the low pressure of the cycle, between about 1 and 3 bar.

6. Process according to any one of the preceding claims in which the offgas is a combustible gas, **characterized in that** said second offgas delivery line (50B) is connected to a burner module (106) operating at a pressure between 1 and 2 bar for feeding burners with fuel.

7. Process according to any one of the preceding claims, **characterized in that** said second step includes an elution step carried out at the low pressure (Pₘ) of the cycle, which is substantially equal to said second delivery pressure.

8. Process according to any one of the preceding claims, **characterized in that**, during at least one fraction of at least one of said first and second steps, the adsorber is fed with a controlled stream of gas coming from another adsorber.

9. Process according to any one of the preceding claims, **characterized in that** at least one of said first and second steps has a duration equal to the phase time T/n, where T denotes the duration of the cycle and n denotes the number of adsorbers.

## Patentansprüche

1. Verfahren zur Herstellung von Wasserstoff durch Druckwechseladsorption zwischen einem niedrigen Druck und einem hohen Druck des Zyklus in wenigstens einem Adsorber, bei dem für den oder jeden Adsorber (I, II, III, IV) ein Druckwechselzyklus eingesetzt wird, der eine Folge von Schritten umfasst, welche die Adsorptionsphasen definieren, mit Produktion von Wasserstoff im Wesentlichen bei hohem Druck (PM) des Zyklus, Dekompression/Regeneration bis zum niedrigen Druck (Pm) des Zyklus mit Entsorgung des restlichen Gases aus dem Adsorber und einem Wiederanstieg des Drucks, **dadurch gekennzeichnet, dass** bei einem ersten Schritt der Dekompressions/Regenerationsphase, währenddessen der Druck des Adsorbers (I, II, III, IV) von einem ersten mittleren Druckbereich umfasst wird, der zwischen dem hohen Druck (PM) und dem niedrigen Druck (Pm) des Zyklus liegt, aus dem Adsorber durch einen Schritt der Dekompression im Gegenstrom das restliche Gas über eine Restgasverteilerleitung (50A) unter einem ersten Verteilerdruck entsorgt wird und **dadurch**, dass bei einem zweiten Schritt der Dekompressions/Regenerationsphase, währenddessen der Druck des Adsorbers (I, II, III, IV) von einem zweiten Druckbereich umfasst wird, der zwischen dem niedrigen Druck (P_{R}) des ersten Druckbereichs und dem niedrigen Druck (Pm) des Zyklus liegt, aus dem Adsorber durch einen Schritt der Dekompression im Gegenstrom das restliche Gas über eine zweite Restgasverteilerleitung (50B) unter einem zweiten Verteilerdruck entsorgt wird, der geringer als der erste Verteilerdruck ist.

2. Verfahren nach Anspruch 1, **dadurch gekennzeichnet, dass** die erste Restgasverteilerleitung (50A) an ein erstes Gasverteilernetz (108) bei einem Druck zwischen etwa 2 und 9 bar angeschlossen ist.

3. Verfahren nach Anspruch 2, bei dem das Restgas ein brennbares Gas ist, **dadurch gekennzeichnet, dass** das erste Gasverteilernetz ein Gasverteilernetz von brennbarem Gas (108) ist, insbesondere einer petrochemischen Anlage (100).

4. Verfahren nach einem der vorherigen Ansprüche, **dadurch gekennzeichnet, dass** der erste Schritt der Dekompressions/Regenerationsphase einen Schritt der Eluierung umfasst, der bei einem Druck durchgeführt wird, der im Wesentlichen dem ersten Verteilerdruck (P_{R}) entspricht.

5. Verfahren nach einem der vorherigen Ansprüche, **dadurch gekennzeichnet, dass** die zweite Restgasverteilerleitung (50B) an ein zweites Gasverteilernetz bei einem Druck angeschlossen wird, der im Wesentlichen dem niedrigen Druck des Zyklus, zwischen etwa 1 und 3 bar, entspricht.

6. Verfahren nach einem der vorherigen Ansprüche bei dem das Restgas ein brennbares Gas ist, **dadurch gekennzeichnet, dass** die zweite Restgasverteilerleitung (50B) an ein Brennermodul (106) angeschlossen ist, das bei einem Druck zwischen 1 und 2 bar funktioniert, um dieses mit Brenngas speisen.

7. Verfahren nach einem der vorherigen Ansprüche, **dadurch gekennzeichnet, dass** der zweite Schritt einen Eluierungschritt umfasst, der bei dem niedrigen Druck (Pm) des Zyklus durchgeführt wird, welcher im Wesentlichen dem zweiten Verteilerdruck entspricht.

8. Verfahren nach einem der vorherigen Ansprüche, **dadurch gekennzeichnet, dass** während mindestens eines Bruchteils mindestens eines der ersten und zweiten Schritte der Adsorber von einem kontrollierten Gasdurchsatz gespeist wird, der aus einem weiteren Adsorber stammt.

9. Verfahren nach einem der vorherigen Ansprüche, **dadurch gekennzeichnet, dass** mindestens einer der ersten und zweiten Schritte eine Dauer aufweist, die der Zeit der Phase T/n entspricht, wo T die Zyklusdauer und n die Anzahl der Adsorber bezeichnet.
